# EUROPÄISCHE PATENTSCHRIFT

(11) **EP 0 886 246 B1**
(45) Veröffentlichungstag und Bekanntmachung des Hinweises auf die Patenterteilung: **02.08.2017**
(21) Anmeldenummer: 98108745.5
(22) Anmeldetag: 14.05.1998
(51) Int. Cl.: G07C 9/00, G07F 7/10, G06Q 20/34, G06Q 20/40

(54) **Verfahren zum Betreiben einer Anlage zur Nutzung einer Chipkarte mit Multifunktionschip und mit Voice-Print**
Method for operating a system using a multifunction smart card with voice print
Procédé pour le fonctionnement d'un système utilisant une carte à puce multifonctionnelle avec empreinte vocale

(30) Priorität: 20.06.1997 DE 19726265
(43) Veröffentlichungstag der Anmeldung: 23.12.1998
(73) Patentinhaber: Deutsche Telekom AG, 53113 Bonn (DE)
(72) Erfinder: Noszek, Wolfgang, Dipl.-Ing., 96163 Gundelsheim (DE)
(74) Vertreter: Gleiss & Grosse

(56) Entgegenhaltungen:
- EP-A- 0 589 184
- EP-A- 0 598 469
- FR-A- 2 642 882
- GB-A- 2 139 389
- US-A- 4 827 518
- US-A- 4 851 654

## Beschreibung

Die Erfindung betrifft ein Verfahren zum Betreiben einer Anlage zur Nutzung einer Chipkarte mit Multifunktionschip.

Die Erfindung liegt allgemein auf dem Gebiet bargeldloser Zahlungsmittel, und insbesondere auf dem Gebiet von Kreditkarten, PayCards und dergleichen, mit anderen Worten auf dem Gebiet der Chipkarten mit Multifunktionschip (MFC). Es ist Ziel dieser Chipkarten, daß sie einfach und mit hoher Sicherheit genutzt werden können. Der übliche Beginn einer Nutzung dieser Art von Chipkarte besteht bislang in der Eingabe einer mehrstelligen PIN (Personal Identification Number; persönliche Identifizierungsnummer) und/oder einer PAN (Personal Access Number, persönliche Zugriffnummer). Diese PIN oder PAN ist auf dem Chip der Chipkarte mehr oder weniger stark verschlüsselt hinterlegt. Die Verifizierung eines Chipkarten-Nutzers erfolgt durch einen Vergleich der Chipkartennummer mit der eingegebenen Nummer und einer in einem externen Rechner hinterlegten Nummer. Problematisch ist dabei, daß bei Nutzung unterschiedlicher Chipkarten der Nutzer sich eine entsprechend große Anzahl von PINs merken muß. Fehleingaben, versehentliches Sperren und Betrug durch schriftlich niedergelegte PINs sind die Folge hiervon.

Sicherheitsprobleme im Zusammenhang mit Chipkarten schränken deren Nutzung drastisch ein. Es ist versucht worden, diese Probleme durch immer komplexere Verschlüsselungsalgorithmen in der Hard- und Software zu überwinden. Dieser Ansatz erscheint jedoch auf Dauer nicht erfolgversprechend, weil zwischenzeitlich der Nachweis gelang, daß Entschlüsselungen sämtlicher Chipinformationen, also sowohl der PIN wie der PAN, grundsätzlich machbar sind. Es sind deshalb neue Wege zur Erhöhung der Nutzungssicherheit von Chipkarte beschritten worden.

Beispielsweise ist es aus der EP-A3-0 612 040 bekannt, den berechtigten Nutzer einer Chipkarte über ein Bild des Nutzers zu identifizieren. Alternativ hierzu ist es aus der EP-A2-0 731 426 bekannt, die Fingerabdrücke eines Nutzers holographisch auf der Karte zu speichern. Darüber hinaus ist aus der EP-A2-0 598 469 eine Nutzung eines sogenannten Voice-Prints(= Stimmabdruck), der in einem externen Rechner abgelegt ist, in Verbindung mit einer PIN bekannt.

Aus der US-A-4 827 518 ist eine Chipkarte bekannt, welche zur Identifizierung eines berechtigten Nutzers dient, dessen Stimmcharakteristik in Form eines Voice-Prints beziehungsweise Stimmabdrucks abgespeichert ist. Die Chipkarte wird mit einer Anlage genutzt, welche ein Kartenlese-/-schreibgerät sowie ein akustisches Übertragungsmittel und einen internen Rechner aufweist. Der Rechner ist dabei mit des Lese-/-schreibgereät und dem akustischen Übertragungsgerät bidirektional verbunden, sodaß er über das Übertragungsmittel akustisch mit einem Nutzer und per Datenübertragung mit einem auf der Chipkarte vorgesehenen Multifunktionschip kommunizieren kann und umgekehrt Nutzer und Chipkarte mit dem Rechner kommunizieren können. Die Kommunikation findet dabei also lediglich lokal statt.

Ferner ist aus der GB-A-2 139 389 eine Vorrichtung sowie ein Verfahren zum Identifizieren von Personen bekannt, bei dem das Sprachsignal eines Nutzers mit einem vorher abgespeicherten Sprachsignal des Nutzers verglichen wird. Das zuvor abgespeicherte Sprachsignal ist dabei auf einer Identitätskarte mittels eines Magnetstreifens oder eines Chips gespeichert. Um sich im System anzumelden, also die Karte zu registrieren, muss sich der Benutzer zunächst zu einem Zentrum mit einer entsprechenden Ausrüstung begeben, wo Sprachproben aufgezeichnet werden, bis eine akzeptable Sprachprobe gefunden und als Binärcode auf die Identitätskarte übertragen wird.

Weiterhin ist aus der Offenlegungsschrift US 3,752,904 A eine Anlage mit einem Kartenleser und einem Telefon, das mit einem externen Rechner verbunden ist, bekannt, wobei der Rechner die Karte identifizierende Daten vom Kartenleser empfängt, wobei der Rechner mittels dieser Daten den vorgespeicherten Voice-Print des Karten-Nutzers erfasst, und wobei der Rechner die Stimme des Nutzers vom Telefon empfängt und diese mit dem vorgespeicherten Voice-Print vergleicht, um die Nutzung der Karte zu erlauben.

Aufgabe der Erfindung ist es, ein Verfahren zum Betreiben einer Anlage zur Nutzung einer Chipkarte anzugeben, mit dem eine Aktivierung der Chipkarte bzw. einer Nutzungsfunktion der Chipkarte von nahezu jedem beliebigen Ort aus durchführbar ist.

Zur Lösung der Aufgabe wird ein Verfahren vorgeschlagen, das die in Anspruch 1 genannten Merkmale aufweist. Vorteilhafte Weiterbildungen der Erfindung sind in den Unteransprüchen angegeben.

Erfindungsgemäß ist vorgesehen, daß zumindest eine Nutzungsfunktion einer Chipkarte mit Multifunktionschip im Rahmen einer Kommunikation zwischen einem Kartenlese-/-schreibgerät bzw. akustischem Übertragungsmittel und einem externen Speicher vor dem ersten Nutzungsvorgang durch einen Nutzer aktiviert wird, wobei hierzu vorgesehen ist, daß vor dieser Kommunikation in einem externen Rechner persönliche Daten über den Nutzer abgelegt werden, der externe Rechner den Nutzer per Kartenlese-/ -schreibgerät und/oder akustischem Übertragungsmittel auffordert, ein Paßwort in das akustische Übertragungsmittel zu sprechen, und der externe Rechner aus dem gesprochenen Passwort einen digitalen Voice-Print ableitet, intern speichert, zum Kartenlese-/ -schreibgerät überträgt, um den digitalen Voice-Print in den Voice-Print-Speicher des Multifunktionschips auf der Chipkarte zu speichern, und daraufhin die Aktivierung der Chipkarte bestätigt.

Mit dem erfindungsgemäßen Verfahren ist es möglich, von jedem beliebigen Ort mit einem Kartenlese-/ -schreibgerät bzw. akustischem Übertragungsmittel zumindest eine Nutzungsfunktion der Chipkarte mit Multifunktionschip zu aktivieren. Damit ist es möglich, die Chipkarte dem Nutzer beispielsweise auf dem Postweg zu übermitteln. Anschließend kann von dem Nutzer zu jedem beliebigen Zeitpunkt die Chipkarte bzw. eine Nutzungsfunktion der Chipkarte aktiviert werden, ohne daß sich dazu der Nutzer an einen bestimmten Ort begeben müßte. Außerdem ist es in vorteilhafter Weise möglich, zu einem späteren Zeitpunkt weitere Nutzungsfunktionen oder zumindest eine weitere Nutzungsfunktion der Multifunktions-Chipkarte über die Kommunikationsverbindung zwischen Kartenlese-/-schreibgerät und dem externen Rechner zu aktivieren. Das erfindungsgemäße Verfahren sieht also neben einem berechtigten Aufruf von verschiedenen Nutzungen einer Chipkarte auch eine Aktivierung der Chipkarte im Rahmen einer Anlage zur Nutzung der Chipkarte vor.

Darüber hinaus kann ein zukünftiger Nutzer der Chipkarte diese beim entsprechenden Provider, beispielsweise dem Betreiber eines nationalen Fernsprechnetzes, beantragen. Der Aufbau der Chipkarte kann als unkritisch betrachtet werden, sofern der Multifunktionschip der Chipkarte einen Voice-Print-Speicher mit einer höheren als der bislang üblichen Speicherfähigkeit von etwa 2 Kbyte hat, beispielsweise eine Speicherfähigkeit in der Größenordnung von MByte aufweist. Bei der Beantragung hinterläßt der zukünftige Nutzer persönliche Daten, die seinem Nutzernamen zugeordnet und im externen Rechner gespeichert werden. Vom Provider erhält der Nutzer ein Paßwort, beispielsweise eine mehrstellige Ziffernfolge, das bzw. die er ausschließlich zur Aktivierung der Chipkarte benötigt. Im Antrag gibt der Nutzer an, welche Nutzungsfunktionen einer Vielzahl von im Multifunktionschip der Chipkarte standardmäßig abgelegten Nutzungsfunktionen er nutzen will. Diese gewünschten Nutzungsfunktionen werden dann durch den Provider aktiviert. Sie kann jedoch auch zu einem späteren Zeitpunkt als spezielle Nutzungsart der Chipkarte vom Nutzer selbst aktiviert werden.

Die Aktivierung der Karte selbst vor der ersten Nutzung erfolgt durch den Nutzer selbst, beispielsweise in einer Telefonzelle oder in einem heimischen Multimedia-Personalcomputer. Der Nutzer wählt sich in den externen Rechner ein, nachdem er die Chipkarte in das Kartenlese-/-schreibgerät eingeführt hat. Der externe Rechner liest von der Chipkarte, daß der Voice-Print-Speicher leer ist. Deshalb fordert der externe Rechner den Nutzer auf, sein geheimes Paßwort einzugeben. Anhand dieses Paßwortes ermittelt der Rechner den Nutzernamen. Im Dialog fragt der externe Rechner nun Daten aus dem Antrag des Nutzers ab, um sicherzustellen, daß dies auch der richtige Nutzer ist.

Während dieser Abfrage wird ein Voice-Print anhand einer Fourier-Analyse aus dem gesprochenen Paßwort mit allen erforderlichen dynamischen Kennzeichen der Stimme des Nutzers ermittelt und im externen Rechner dem Nutzernamen zugeordnet gespeichert.

Anschließend wird der derart erstellte Voice-Print auf den Multifunktionschip in der Chipkarte übertragen und dort gespeichert. In einer Gegenprüfung wird der Voice-Print von der Chipkarte zum externen Rechner rückgesendet und von diesem geprüft. All dies geschieht simultan während der Kommunikation des Nutzers mit dem externen Rechner. Nachdem der externe Rechner Übereinstimmung der beiden Voice-Prints festgestellt hat, wird die Karte aktiviert und dies wird dem Nutzer bevorzugt akustisch mitgeteilt. Damit ist die Karte speziell auf den Nutzer zugeschnitten und für diesen nutzbar. Je nach Speichervolumen der Chipkarte ist es auch möglich, daß weitere Personen aus seinem Umkreis, wie etwa Familienmitglieder, Familienangehörige und dergleichen eine Nutzungsmöglichkeit eingeräumt bekommen.

Jede Nutzung der Chipkarte folgend auf die Aktivierung der Chipkarte basiert auf einem Abgleich des Voice-Prints der auf der Chipkarte gespeichert ist mit dem Voice-Print der im externen Rechner abgelegt ist.

Erfindungsgemäß wird zusätzlich zu diesem Vergleich ein weiterer Vergleich bei der akustischen Kommunikation des Nutzers mit dem externen Rechner durchgeführt, und zwar ein Vergleich des Voice-Prints der im externen Rechner abgelegt ist, mit der Stimme des Nutzers der Chipkarte, wobei die angeforderte Nutzung vom externen Rechner nur freigegeben wird, wenn bei diesem Stimmenvergleich ein vorbestimmter Übereinstimmungsgrad ermittelt wird. Dieser Abgleich kann auch als Voice-Fire-Wall bezeichnet werden.

Bevorzugt ist der vorbestimmte Übereinstimmungsgrad zwischen der Stimme des Nutzers und dem abgespeicherten Voice-Print klassifiziert nach Wichtigkeit der vom Nutzer angeforderten Nutzung, wobei dieser Übereinstimmungsgrad bei hoher Wichtigkeit entsprechend höher angesetzt ist als bei niedrigerer Wichtigkeit. Die Wichtigkeit kann auch als Nutzungsebene bezeichnet werden, wobei eine niedrigere Nutzungsebene beispielsweise die Nutzung der Chipkarte zum Telefonieren ist, während eine höhere Nutzungsebene die Nutzung der Chipkarte beispielsweise als Geldbörse ist.

Um die Sicherheit bei dieser Übereinstimmungsprüfung noch weiter zu erhöhen, erfolgt diese lediglich eine festgelegte Anzahl von Malen, bevor ein negatives Ergebnis entweder zum Abbruch der Verbindung mit dem externen Rechner und/oder zu einer Verbindung mit einem Operator führt. Wenn das negative Übereinstimmungsergebnis den Verdacht erhärtet, daß ein Mißbrauchsfall vorliegt, kann die Chipkarte durch den externen Rechner auch gesperrt werden.

Ein wesentlicher Aspekt der Erfindung ist, daß bei jeder Nutzung der Chipkarte der Voice-Print auf dieser nicht nur geprüft, sondern auch verfeinert und gegebenenfalls auf die Karte rückgespeichert wird. Dieser Lernprozeß führt zu einer sehr hohen Nutzer- bzw. Mißbrauchserkennungsrate.

Mit dem erfindungsgemäßen Verfahren kann eine Chipkarte genutzt werden, die einen Multifunktionschip aufweist, in welchem zur Identifizierung eines berechtigten Nutzers durch einen externen Rechner dessen Stimmcharakteristik in Form eines Voice-Print bzw. Stimmabdrucks abgespeichert ist. Mit dem Ablegen charakteristischer Merkmale der Stimme eines Nutzers in Gestalt eines Voice-Print auf der Chipkarte kann die Sicherheit bei der Identifizierung des berechtigten Nutzers beträchtlich erhöht werden. Insbesondere erlaubt diese Maßnahme eine Identifizierung des berechtigten Chipkarten-Nutzers ohne Eingabe einer PIN bzw. einer PAN, da aus der Stimme des Nutzers ausreichend Merkmale extrahiert werden können, um die Identifizierung gegebenenfalls im Zusammenhang mit einer entsprechend ausgelegten Anlage und dem erfindungsgemäßen Verfahren gewährleisten zu können.

Eine Anlage zur Nutzung einer Chipkarte mit Multifunktionschip und auf diesem abgespeicherten Voice-Print, die mittels des erfindungsgemäßen Verfahrens betrieben werden kann, umfaßt neben dem bei einer Chipkarten-Identifizierung stets erforderlichen externen Rechner und dem stets erforderlichen Kartenlesegerät ein akustisches Übertragungsmittel, das zusätzlich zu dem Kartenlesegerät mit dem externen Rechner verbindbar ist. Außerdem muß das Kartenlesegerät auch als -schreibgerät ausgelegt sein, das bidirektional mit dem externen Rechner verbindbar ist. Das heißt, die Übertragung zwischen dem Kartenlese-/-schreibgerät mit dem externen Rechner erfolgt ebenso bidirektionell wie die Kommunikation zwischen diesem und dem akustischen Übertragungsgerät, so daß der externe Rechner über das Übertragungsmittel akustisch mit einem Nutzer und per Datenübertragung mit dem Multifunktionschip der Chipkarte kommunizieren kann. Damit stehen bei der Anlage alle Mittel bereit, um einen Abgleich zwischen dem Voice-Print auf der Chipkarte und einem im externen Rechner gespeicherten Voice-Print des Nutzers und darüber hinaus weitere Abgleichmaßnahmen zwischen der Stimme des Nutzers und dem im externen Rechner abgelegten Voice-Print vornehmen zu können.

Bei dem Übertragungsmittel der Anlage, die mittels des erfindungsgemäßen Verfahrens betrieben werden kann, handelt es sich bevorzugt um einen Telefonapparat, der beispielsweise über ein Telekommunikationsnetz mit einem externen Rechner verbindbar ist. Alternativ hierzu kann der externe Rechner auch mit dem Telefonapparat ohne Zwischenschaltung des Telekommunikationsnetzes verbunden sein; in diesem Fall ist der externe Rechner beispielsweise in unmittelbarer Nähe des Kartenlese-/-schreibgeräts untergebracht. Diese Variante ist z.B. im Zusammenhang mit der Zugangsberechtigung zu Gebäuden/Rechnern/Zeiterfassungssystemen mittels der Chipkarte von Interesse.

Die Erfindung wird nachfolgend anhand der Zeichnung beispielhaft näher erläutert; es zeigen:
- Figur 1: schematisch die Peripherie bzw. Anlage zur Nutzung einer Chipkarte mit Voice-Print,
- Figur 2: ein Flußdiagramm zur Erläuterung des Aktivierungsprozesses der Chipkarte mit Voice-Print vor der ersten Nutzung dieser Chipkarte,
- Figur 3: ein Flußdiagramm des Telefoniervorgangs mit Hilfe der Chipkarte mit Voice-Print unter Sprachsteuerung,
- Figur 4: schematisch ein Flußdiagramm des Ladens der Kartenbörse der Chipkarte mit Voice-Print, und
- Figur 5: schematisch ein Flußdiagramm zur Erläuterung weiterer Kartenfunktionen der Chipkarte mit Voice-Print.

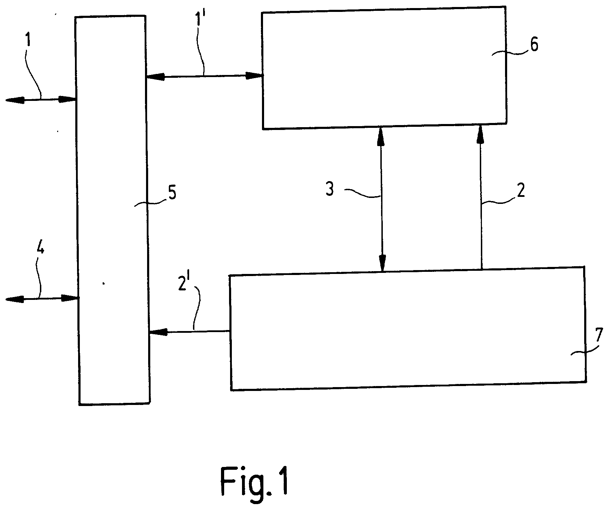

In Figur 1 ist schematisch eine Anlage zur Nutzung einer Chipkarte gezeigt, die mittels des erfindungsgemäßen Verfahrens betrieben werden kann. Die Anlage weist eine Netzanschaltung 5 zum Anschalten an das Telekommunikationsnetz, eine Spracherkennungs-/Sprecherverifizierungseinrichtung zur Spracherkennung und Verifizierung eines Sprechers 6 und einen Rechner 7 auf, der in einer Datenbank Informationen über den Nutzer enthält sowie Mittel zur Bereitstellung weiterer Dienste aufweist. Ein Nutzer erhält mittels seiner Chipkarte mit Voice-Print über ein geeignetes Zugangssystem Zugang zu dieser Anlage, beispielsweise mittels eines Telefons, eines Rechners, vor allem eines Multimedia-Personalcomputers, und über eine sonstige geeignete Einrichtung mit Kartenlese-/-schreibgerät und akustischem Wandler. Durch Wahl einer einheitlichen Servicenummer wird er über das Telekommunikationsnetz mit dem externen Rechner 7 verbunden.

Die Durchschaltung eines Nutzeranrufs ist in Figur 1 durch Doppelpfeile bezeichnet. Der ankommende Anruf wird über einen in der Netzanschaltung 5 enthaltenen Matrixschalter zu der Spracherkennungs-/Sprecherverifizierungseinrichtung 6 durchgeschaltet (Doppelpfeil 1). Die Spracherkennungs-/Sprecherverifizierungseinrichtung 6 arbeitet unter Steuerung durch den Rechner 7 (wie durch den Pfeil 2 bezeichnet). Nach Abgleich eines ankommenden Voice-Prints (vorliegend abgekürzt auch als VP bezeichnet) mit dem im Rechner 7 gespeicherten VP und gegebenenfalls Abprüfen weiterer gespeicherter Dienste (dieser Vorgang ist mit dem Doppelpfeil 3 bezeichnet) wird der Kommunikationsweg zum Zugangssystem eines Nutzer durchgeschaltet (wie durch den Doppelpfeil 4 bezeichnet).

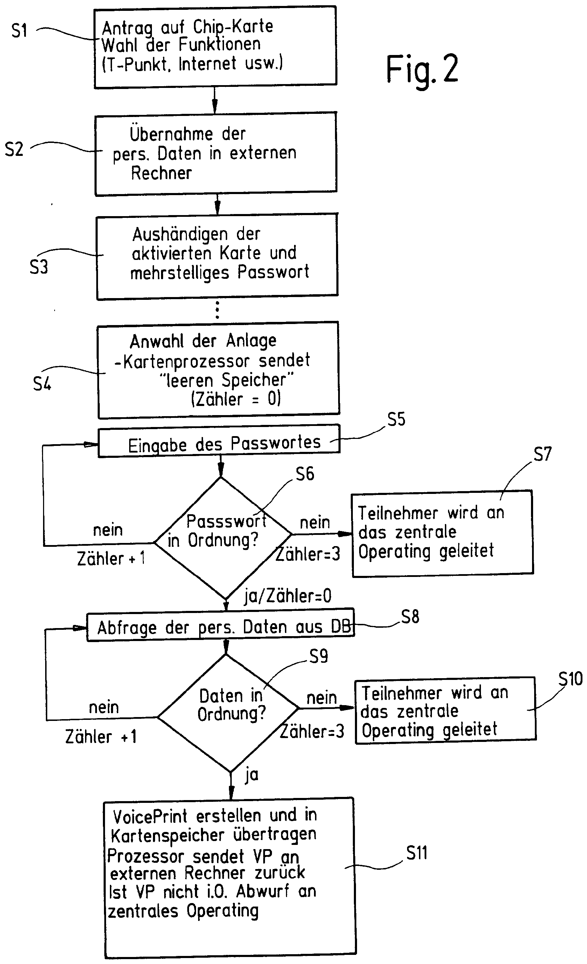

Im folgenden werden die unterschiedlichen Nutzungsarten der Anlage durch die Chipkarte mit Voice-Print anhand der Flußdiagramme von Figuren 2 bis 5 näher erläutert.

Zunächst erfolgt eine Erläuterung der Aktivierung der Chipkarte mit Voice-Print vor der ersten Nutzung dieser Chipkarte anhand des Flußdiagramms von Figur 2.

Im Schritt S1 stellt ein zukünftiger Nutzer einen Antrag für einen MFC-Karte unter Angabe der erforderlichen persönlichen Daten, wie Vorname, Name, Geschlecht, Geburtsdatum, Wohnort, Straße, gegebenenfalls Telefonnummer, Bankverbindung. Dieser Antrag kann entweder in einem Service-Zentrum der jeweiligen Telekommunikationsgesellschaft über Internet oder eine sonstigen geeignete Zugangsstelle eines Providers gestellt werden. Der Antrag bzw. die in ihm enthaltenen Daten über den zukünftigen Nutzer werden in der Datenbank des Rechners 7 der Anlage gespeichert (Schritt S2). Im Rahmen dieser Antragsprozedur hat der zukünftige Nutzer auch die Möglichkeit, sich für die durch die Chipkarte mit Voice-Print gebotenen Funktionen zu entscheiden, die grundsätzlich sämtliche auf der Chipkarte gespeichert sind, jedoch nur nach Wunsch aktiviert werden. Nach Bearbeitung des Antrags enthält der zukünftige Nutzer die für seine speziellen Bedürfnisse aktivierte Chipkarte, die noch keinen Voice-Print enthält, und das vergebene Paßwort, bei der es sich um eine mehrstellige Zahlenkombination handelt, bevorzugt verdeckt in Form eines Folders (Schritt S3). Das Paßwort wird von der VFW durch einen Zufallsalgorithmus ermittelt, wobei dafür gesorgt ist, daß diese Zahl nur ein einziges Mal vergeben wird. Um dies sicherzustellen, können ohne weiteres bis zu zehnstellige Nummern vergeben werden, da diese bei der Aktivierung vom zukünftigen Nutzer nur abgelesen und nicht gemerkt werden müssen.

Mit Hilfe dieser Chipkarte nimmt der Nutzer nunmehr die Aktivierung der Chipkarte in einem ihm genehmen Zugangssystem vor, beispielsweise in einer Telefonzelle, an seinem heimischen Personalcomputer, der zu diesem Zweck mit einem Kartenlese-/-schreibgerät versehen ist, oder mit Hilfe seines privaten Telefons, das ebenfalls mit einem solchen Gerät versehen sein muß.

Im Schritt S4 wird die noch nicht mit Voice-Print versehene Chipkarte in den Kartenleser gesteckt und die einheitliche Zugangsnummer zu der Anlage gewählt. Der Prozessor auf der Chipkarte sendet "Leerer Speicher" an den Rechner 7 (Figur 1). Der Rechner 7 fordert daraufhin im Schritt S5 den Nutzer auf, sein Paßwort zu sprechen. Im Schritt S6 prüft der Rechner 7, ob das Paßwort in Ordnung ist, falls dies nicht der Fall ist, wird der Schritt S5 wiederholt, demnach die Angabe des Paßworts angefordert wird. Gleichzeitig wird ein Zähler gestartet, und wenn diese Schleife (S6, S5, S6) mit erneuter Anforderung zur Eingabe des Paßworts dreimal erfolglos durchlaufen wurde (Zählerstand = 3), schreitet der Fluß vom Schritt S6 zum Schritt S7 weiter, in welchem eine Verbindung mit einem zentralen Operatorplatz hergestellt wird, der dann versucht, daß offenbar vorliegende Probleme bezüglich des Paßworts mit dem Nutzer zu klären. Wenn das Paßwort dann in Ordnung ist, oder wenn es bereits nach der ersten bzw. zweiten oder dritten Eingabe in Ordnung ist, schreitet der Fluß vom Schritt S6 zum Schritt S8 weiter, in welchem die persönlichen Daten abgefragt und mit den im Rechner 7 abgespeicherten persönlichen Daten verglichen werden. Bei dieser Prozedur wird gleichzeitig der Voice-Print mit seinen dynamischen Stimmen-Kennzeichen in der Einrichtung 6 und im Rechner 7 erstellt und dort gespeichert. Sind sämtliche Daten korrekt (Schritt S9), wird der Voice-Print an die Karte übertragen und dort gespeichert und zu Testzwecken von der Chipkarte nochmals zum Rechner 7 geschickt (Schritt S11), wobei, wenn alles in Ordnung ist, die Aktivierung dem Nutzer mitgeteilt und in der Datenbank des externen Rechners 7 mit Datum und Uhrzeit vermerkt wird.

Wie im Fall der Schleife S6, S5, S6 ist auch im Zusammenhang mit S9 eine Schleife vorgesehen: S9, S8, S9, die in Zusammenwirkung mit einem Zähler die Telefonverbindung zum Operatorplatz herstellt, um die Probleme beim Datenableich gegebenenfalls durch ein Telefongespräch mit dem Nutzer ausräumen zu können.

Eine ähnliche Verbindung zum Operatorplatz ist gegebenenfalls im Schritt S11 vorgesehen, dessen erfolgreiche Beendigung den Nutzer in den Stand versetzt, die Chipkarte sofort zu nutzen.

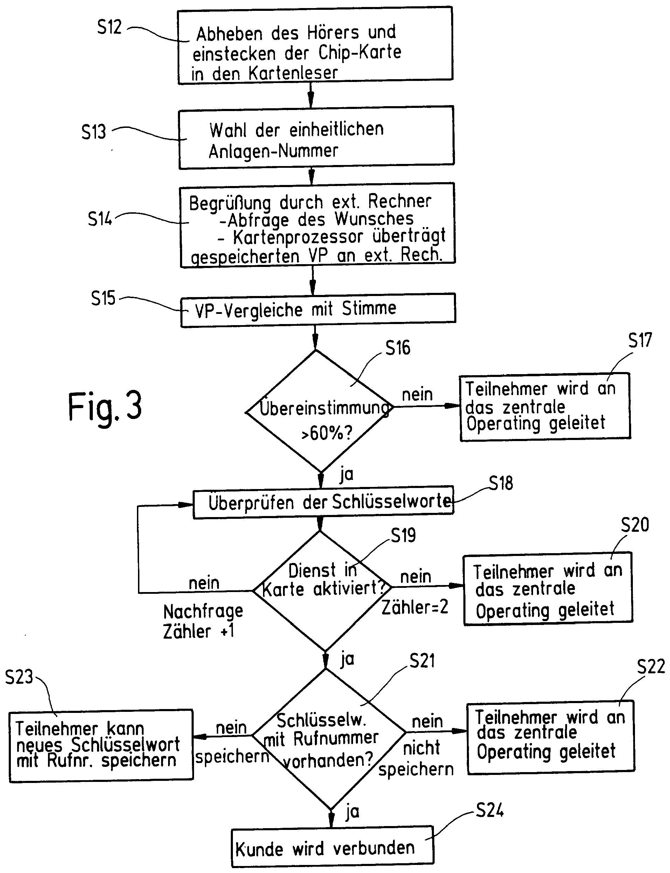

Im folgenden wird anhand des Flußdiagramms von Figur 3 das Telefonieren mit der aktivierten Chipkarte mit Voice-Print mittels Sprachsteuerung erläutert.

Für die folgende Darstellung des Telefonierens und der Sprachsteuerung wird von einem Zugangssystem mit Kartenleser ausgegangen, beispielsweise von einer öffentlichen Telefonzelle. Weitere Zugangsmöglichkeiten sind möglich, beispielsweise von einem privaten Telefon mit Kartenleser oder von einem Personalcomputer mit Kartenleser.

Der Nutzer betritt die Telefonzelle, hebt den Hörer ab und steckt die Chipkarte mit Voice-Print in den Kartenleser (Schritt S12). Nachdem er die einheitliche Nummer der Anlage gewählt hat (Schritt S13) wird er vom System (vom Rechner 7) begrüßt und nach seinem Namen und seinen Wünschen gefragt, wobei der Prozessor auf der Chipkarte gleichzeitig den Voice-Print an den Rechner 7 zum Vergleich mit dem dort gespeicherten Voice-Print überträgt (Schritt S14). Bei Übereinstimmung der Voice-Prints schreitet der Fluß zum Schritt S15 weiter. Die Sprecherkennungs-/Sprecherverifizierungseinrichtung 6 vergleicht zusammen mit dem Rechner 7 den in dessen Speicher hinterlegten Voice-Print mit der Stimme des Nutzers (Schritt S15). Im Schritt S16 wird der Grad an Übereinstimmung zwischen der Stimme des Nutzers und dem im Rechner 7 gespeicherten Voice-Print überprüft. Falls die Prüfung auf Übereinstimmung ein positives Ergebnis hat, schreitet der Fluß zum Schritt S18 weiter, anderenfalls schreitet er zum Schritt S17 weiter, in welchem der Nutzer mit dem Operatorplatz verbunden wird, um vorliegende Probleme abzuklären.

Die beim Vergleich der Sprechstimme des Nutzers mit dem Voice-Print im Speicher des Rechners 7 erzielte Übereinstimmung muß nicht allzu hoch sein, da der Nutzer im vorliegenden Fall lediglich telefonieren und keine stärker schützenswerte Aktivitäten ergreifen will. Zusätzliche Sicherheitsprüfungen sind demnach nicht erforderlich, und sollen auch deshalb unterbleiben, um den Zeitverzug durch die Prüfung so gering wie möglich zu halten. Nur für den Fall, daß die Unstimmigkeiten sehr groß sind, nämlich größer 60%, wobei in diesem Fall, Betrugsverdacht besteht, erfolgt eine Verbindung mit dem Operatorplatz (Schritt S17). Nachdem der Nutzer mit seinem Namen begrüßt wurde, äußert er seinen aktuellen Telefonwunsch, beispielsweise wie folgt: "Telefon, Mayer, mein Büro". Das System erkennt an den gesprochenen Schlüsselworten "Telefon", "Mayer" und "Büro" den vom Nutzer gewünschten Dienst, nämlich eine Verbindung mit dem Büro des Nutzers, wobei dem Wort "Büro" eine entsprechend gespeicherte Nummer zugeordnet ist. Ergibt eine Prüfung, daß diese Nummer vorhanden ist, erhält der Nutzer den Hinweis, daß mit seinem Büro verbunden wird (Schritt S24). Dem Schritt S24 geht demnach der Schritt S18 zur Überprüfung eines vereinbarten Schlüsselworts voraus, gefolgt vom Schritt S19, in dem geprüft wird, ob der entsprechende Dienst, nämlich das Telefonieren als Dienst in der Chipkarte aktiviert ist, wobei eine Schleife S19, S18, S20 für den Fall vorgesehen ist, daß die Überprüfung des Schlüsselworts und/oder die Prüfung auf Aktivierung des entsprechenden Dienstes kein positives Ergebnis gezeitigt hat, wobei in diesem Fall im Schritt S20 wiederum eine Verbindung mit dem Operatorplatz hergestellt wird.

Im Schritt S21 wird geprüft, ob das Schlüsselwort mit einer Rufnummer verknüpft ist. Falls diese Verknüpfung nicht vorhanden ist, schreitet der Fluß entweder zum Schritt S22 weiter, in welchem eine Verbindung mit dem zentralen Operatorplatz hergestellt wird, oder zum Schritt S23, in welchem der Nutzer aufgefordert wird, das Schlüsselwort mit der Rufnummer zu speichern. Bevorzugt wird daraufhin die Telefonnummer zur Kontrolle wiedergegeben, und anschließend gespeichert, und der Nutzer wird mit dieser Nummer verbunden.

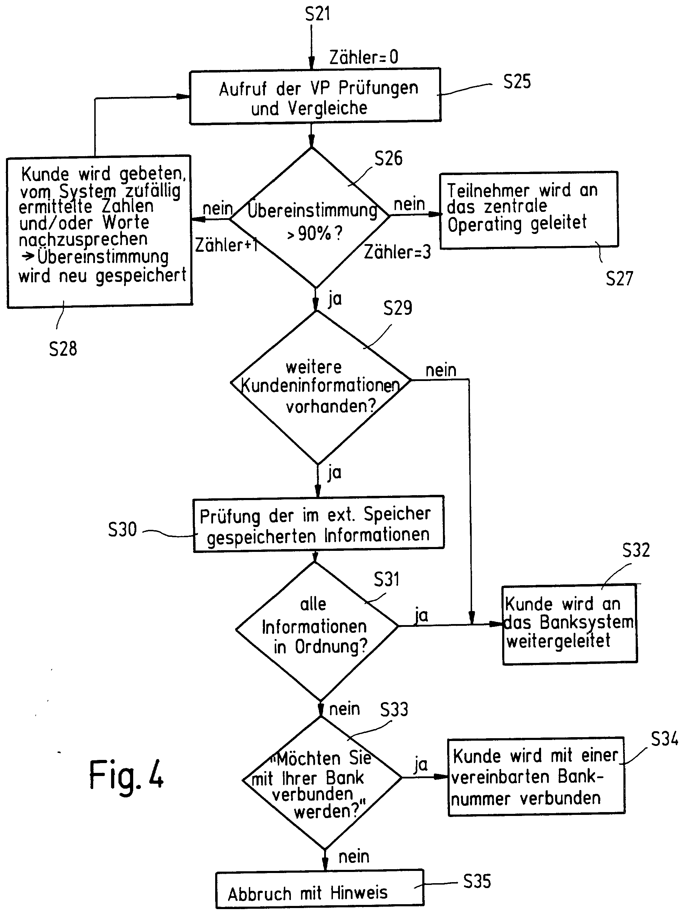

Anhand des Flußdiagramms von Figur 4 wird nunmehr die Nutzung der Börsenfunktion der Chipkarte mit Voice-Print näher erläutert.

Während es sich bei den Nutzungsvorgängen gemäß den Flußdiagrammen von Figur 2 und 3 um Nutzungen auf der sogenannten ersten Nutzungsebene gehandelt hat, die keine besonderen Sicherheitsanforderungen bedürfen (siehe Übereinstimmungsgrad größer 60% beim Voice-Print-Vergleich), handelt es sich bei der Nutzung der Börsenfunktion der Chipkarte um eine Nutzung auf der zweiten Nutzungsebene, für die ein Höchstmaß an Sicherheit geboten ist.

Im folgenden wird unterstellt, daß der Nutzer seine Börse, die als Börsenfunktion auf der Chipkarte gespeichert ist, aufladen will. Diese Funktion ist in derselben Weise wie bei den Nutzungen gemäß Figuren 1 und 2 an einem Telefon oder Personalcomputer mit Kartenleser möglich.

Der Systemzugang in diesem Fall ist dieselbe wie in den Schritten S12 bis S21 (Figur 3), weshalb auf die diesbezügliche Erläuterung dieser Schritte im Zusammenhang mit Figur 3 bezug genommen wird. Nach dem Systemzugang, d.h. nach dem Schritt S21 von Figur 3 werden im Schritt S25 von Figur 4 die VP-Prüfungen und Vergleiche durchgeführt, sobald der Nutzer beispielsweise folgenden Wunsch geäußert hat: "Börse, Mayer, Laden mit 400 Mark". Das System erkennt anhand der unterstrichen dargestellten Schlüsselworte den geforderten Dienst. Da es sich bei diesem Dienst um einen Nutzen mit hohem Sicherheitsanspruch handelt, erfolgt ein diese Sicherheit gewährleistender Ablauf des Dialogs mit dem Nutzer. Wie bereits vorstehend im Zusammenhang mit dem Schritt S16 angeführt, erfolgt ein Vergleich zwischen der Nutzerstimme, die während der Wunschäußerung des Nutzers von der Chipkarte zum Rechner 7 übertragen wurde, mit dem Voice-Print, der im Rechner 7 abgespeichert ist (Figur 1). Liegt die erzielte Übereinstimmung über 90%, wird der Nutzer sofort in die zweite Nutzungsebene weitergeleitet, die mit dem Schritt S29 beginnt (Schritt S26). Eine niedrigere Übereinstimmung als 90% wird dem Nutzer mitgeteilt (Schritt S28) und es erfolgt ein neuer Dialog, in welchem der Nutzer gebeten wird, vom System zufällig ermittelte Zahlen und/oder Worte nachzusprechen, woraufhin die Übereinstimmung erneut ermittelt und gespeichert wird, und zwar über die Schritte S25 und S26. Die dabei auftretende zeitliche Verzögerung ist aufgrund des gebotenen Sicherheitsmaßes tolerierbar. Die Schleife S26, S28, S21, S26 wird insgesamt höchstens dreimal durchlaufen, und zwar unter Steuerung eines Zählers, wobei nach erfolglosem dreimaligen Ablauf der Nutzer zum Operatorplatz weitergeleitet wird (S27). In dem Dialog im Schritt S28 werden neben Daten aus dem Kartenantrag des Nutzers auch Zufallszahlen, wie erwähnt, oder Worte an den Nutzer mit der Bitte um nachsprechen übermittelt. Während dieses Übermittlungsvorgangs wird auch laufend der Voice-Print überprüft. Nach derzeitigen wissenschaftlichen Erkenntnisse liegt die Erkennungswahrscheinlichkeit auf der Grundlage eines benutzerindividuellen Voice-Prints bei etwa 97%, wobei die Übertragung der Stimme des Nutzers unter Berücksichtigung von Nebengeräuschen ausgewertet und auch die Sprachdynamik individuell ausgewertet wird.

Im Schritt S29 wird geprüft, ob weitere Nutzerinformationen vorhanden sind. Falls nicht, erfolgt unmittelbar der Zugang zur Bank, um das Aufladen der Börse auf der Chipkarte zu bewirken (Schritt S32). Die Bank überträgt dabei Information in die nutzerspezifische Datenbank des Rechners 7, wie etwa den maximal möglichen Ladebetrag, beispielsweise 500 Mark, wobei dann, wenn dieser Betrag überschritten wird, der Nutzer mit einer vorher festgelegten Nummer der Bank verbunden wird. Eine alternative Information ist beispielsweise, daß der Nutzer seine Börse nicht aufladen darf.

Falls der Schritt S29 das Ergebnis erbringt, daß weitere Nutzerinformationen vorhanden sind, schreitet der Fluß zum Schritt S30 weiter, in welchem die im Datenspeicher des Rechners 7 gespeicherten Informationen geprüft werden. Sind diese Informationen in Ordnung, erfolgt Weiterbehandlung im Schritt S32 (Schritt S31). Ergibt die Prüfung im Schritt S31, daß die Informationen nicht in Ordnung sind, schreitet der Fluß zum Schritt S32 weiter, und der Nutzer wird vom System gefragt, ob er mit seiner Bank verbunden werden möchte. Falls der Nutzer auf diese Frage mit "ja" antwortet, schreitet der Fluß zum Schritt S34 weiter, und es erfolgt eine Verbindung des Nutzers mit einer mit der Bank vereinbarten Telefonnummer. Falls die Antwort des Nutzers im Schritt S33 "nein" lautet, erfolgt ein Abbruch mit einem entsprechenden Hinweis hierauf vom System.

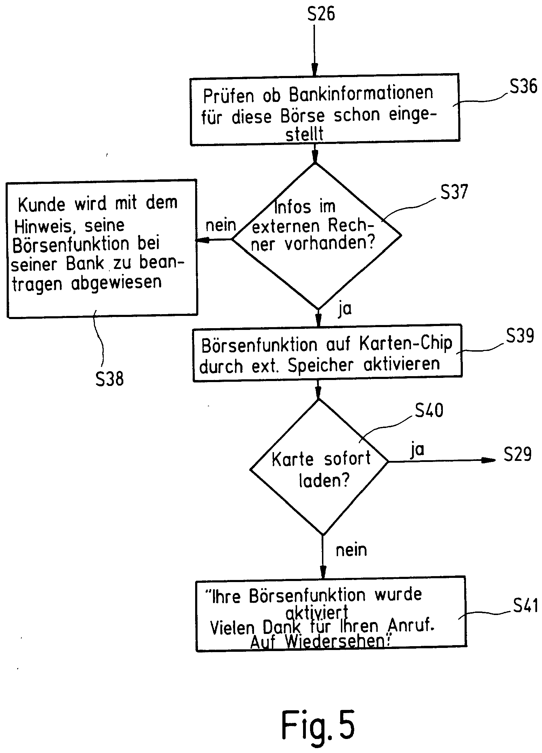

Anhand des Flußdiagramms von Figur 5 wird nunmehr die Aktivierung weiterer Kartenfunktionen erläutert.

Bei Ausgabe der Chipkarte an den Nutzer, ist die Karte mit allen Diensten versehen, die der Nutzer wünscht, wie vorstehend erläutert. Hat dieser beispielsweise ausschließlich den Telefondienst aktivieren lassen, ist zwar die Börsenfunktion auf der Chipkarte vorhanden, jedoch nicht aktiv. In diesem Fall sind dann auch weitere Funktionen nicht aktiv, wie beispielsweise Zugangsberechtigung zu bestimmten Gebäuden oder Rechnern, zu Zeiterfassungssystemen, Speicherfunktionen für medizinische oder sonstige Informationen. Diese auf der Karte vorhandenen, jedoch nicht aktivierten Funktionen können durch den Nutzer nachträglich aktiviert werden. Dieses Nachholen einer vorhandenen, jedoch nicht aktivierten Funktion wird beispielhaft anhand der Aktivierung der Börsenfunktion erläutert.

Die Zugangsprozedur entspricht derjenigen von Figur 3 bis einschließlich Schritt S26, d.h. es erfolgt eine Zugangsprüfung unter der höchstmöglichen Sicherheitsstufe. Es wird auch bemerkt, daß der Schritt S21 im vorliegenden Fall folgende Bedeutung hat: Das Schlüsselwort "Aktivieren" stellt keinen zu aktivierenden Dienst auf der Karte dar, sondern wird von dem Rechner 7 vorgenommen.

Im Schritt S36 wird geprüft, ob die Bankinformationen für die Börse dieser Chipkarte schon eingestellt sind. Nachdem eine Börsenfunktion immer zuerst ein Dienst in Verbindung mit einer Bank ist, überprüft der Rechner 7 anhand des Nutzernamens, ob in der Nutzerdatenbank bereits ein Eintrag einer Bank vorliegt (Schritt S37). Ein solcher Eintrag entsteht, wenn ein Nutzer dies über seine Bank entsprechend beantragt. Im vorliegenden Fall wird eine entsprechende Vorgesehensweise unterstellt. Jede andere Konstellation im Zusammenhang mit einer Beantragung eines Nutzers bei seiner Bank ist ebenfalls möglich und durch das System steuerbar. Ist ein entsprechender Eintrag nicht vorhanden (die Antwort im Schritt S37 lautet "nein"), wird die Aktivierung des Dienstes auf der Chipkarte mit einem entsprechenden Hinweis von der Anlage abgelehnt (Schritt S38), beispielsweise mit einem Hinweis, daß der Nutzer seine Börsenfunktion bei seiner Bank zunächst beantragen muß.

Lautet die Antwort im Schritt S37 hingegen "ja", wird im Schritt S39 die Börsenfunktion auf der Chipkarte aktiviert und der Nutzer wird im Schritt S40 gefragt, ob die Karte sofort mit einem gewünschten Betrag geladen werden soll. Falls die Antwort im Schritt S40 "ja" lautet, schreitet der Fluß zum Schritt S29 (Figur 4) weiter. Falls die Antwort im Schritt S40 "nein" lautet, verabschiedet sich das System mit dem Hinweis, daß die Börsenfunktion aktiviert wurde. Der Nutzer der Chipkarte ist nunmehr in der Lage, die Börsenfunktion immer wieder bzw. erneut zu nutzen.

## Patentansprüche

1. Verfahren zum Betreiben einer Anlage zur Nutzung einer Chipkarte mit Multifunktionschip, in welchem zur Identifizierung eines berechtigten Nutzers durch einen externen Rechner (7) dessen Stimmcharakteristik in Form eines Voice-Prints abgespeichert ist, wobei die Anlage ein Kartenlese-/-Schreibgerät und ein akustisches Übertragungsmittel aufweist, die mit dem externen Rechner (7) verbunden sind, wobei die Übertragung zwischen dem Kartenlese-/- Schreibgerät beziehungsweise dem akustischen Übertragungsmittel und dem externen Rechner (7) bidirektional ausgelegt ist, sodass der externe Rechner (7) über das Übertragungsmittel akustisch mit dem Nutzer und per Datenübertragung via das Kartenlese-/-schreibgerät mit dem Multifunktionschip der Chipkarte kommunizieren kann und umgekehrt der Nutzer und Chipkarte mit dem externen Rechner (7) kommunizieren können, und wobei die Chipkarte im Rahmen einer Kommunikation zwischen dem Kartenlese-/-schreibgerät beziehungsweise akustischem Übertragungsmittel und dem externen Rechner (7) vor dem ersten Nutzungsvorgang durch einen Nutzer aktiviert wird, indem:
a) vor dieser Kommunikation im externen Rechner (7) persönliche Daten über den Nutzer abgelegt werden,
b) der externe Rechner (7) den Nutzer per Kartenlese-/ -Schreibgerät und/oder akustischem Übertragungsmittel auffordert, ein Passwort in das akustische Übertragungsmittel zu sprechen, und
c) der externe Rechner (7) aus dem gesprochenen Passwort einen digitalen Voice-Print ableitet, intern speichert, zum Kartenlese-/-schreibgerät überträgt, um den digitalen Voice-Print in einem Voice-Print-Speicher des Multifunktionschips auf der Chipkarte zu speichern, und daraufhin die Aktivierung der Chipkarte bestätigt,
**dadurch gekennzeichnet, dass** jeder Nutzung der Chipkarte ein Vergleich des im Multifunktionschip der Chipkarte gespeicherten Voice-Prints mit dem im Speicher des externen Rechners (7) gespeicherten Voice-Prints vorausgeht,
dass bei Übereinstimmung dieser Voice-Prints der externe Rechner (7) zusätzlich einen Vergleich zwischen dem Voice-Print und der Stimme des Nutzers der Chipkarte durchführt, und
dass die Nutzung der Chipkarte vom externen Rechner (7) nur dann freigegeben wird, wenn diese Voice-Prints übereinstimmen und bei dem Stimmenvergleich ein vorbestimmter Übereinstimmungsgrad ermittelt wird.

2. Verfahren nach Anspruch 1, **dadurch gekennzeichnet, dass** im Schritt c) der im Voice-Print-Speicher des Multifunktionschips der Chipkarte gespeicherte Voice-Print vor Bestätigung der Aktivierung der Chipkarte durch den externen Rechner (7) an diesen zum Vergleich mit dem im externen Rechner (7) gespeicherten Voice-Print rückübertragen wird, der die Aktivierung bestätigt, wenn der rückübertragene Voice-Print mit dem intern gespeicherten Voice-Print übereinstimmt.

3. Verfahren nach Anspruch 1, **dadurch gekennzeichnet, dass** im Schritt a) auch festgelegt wird, welche im Multifunktionschip abgelegten Nutzungsfunktionen aktiviert werden sollen.

4. Verfahren nach Anspruch 1, **dadurch gekennzeichnet, dass** der externe Rechner (7) den Nutzer per Kartenlese-/-schreibgerät und/oder akustischem Übertragungsmittel auffordert, für den Stimmenvergleich vorbestimmte Schlüsselworte in den akustischen Übertrager zu sprechen, die die angeforderte Nutzung kennzeichnen.

5. Verfahren nach Anspruch 1 oder 4, **dadurch gekennzeichnet, dass** der vorbestimmte Übereinstimmungsgrad klassifiziert ist nach der Wichtigkeit der vom Nutzer angeforderten Nutzung, wobei dieser Übereinstimmungsgrad bei hoher Wichtigkeit entsprechend höher angesetzt ist als bei niedriger Wichtigkeit.

6. Verfahren nach einem der Ansprüche 1 bis 5, **dadurch gekennzeichnet, dass** die Prüfung auf Übereinstimmung der Stimme mit dem Voice-Print eine nur festgelegte Anzahl von Malen durchgeführt wird, wobei bei negativem Ergebnis entweder die Verbindung zum externen Rechner (7) unterbrochen und/oder eine Verbindung des akustischen Übertragers zu einem Operator hergestellt wird.

7. Verfahren nach Anspruch 6, **dadurch gekennzeichnet, dass** die Chipkarte bei negativem Übereinstimmungsergebnis, gegebenenfalls nach Kommunikation mit dem Operator durch den externen Rechner (7) gesperrt wird.

8. Verfahren nach einem der Ansprüche 1 bis 7, **dadurch gekennzeichnet, dass** der Voice-Print bei jeder Kommunikation verfeinert wird, und dass der verfeinerte Voice-Print im Multifunktionschip der Chipkarte und im externen Rechner (7), den bisherigen Voice-Print ersetzend, abgespeichert wird.

## Claims

1. A method for operating a system for using a chip card with a multi-function chip, in which the voice characteristics of an authorised user are stored in the form of a voiceprint to identify said user by means of an external computer (7), wherein the system has a card reading/writing device and an acoustic transmission means, which are connected to the external computer (7), wherein the transmission between the card reading/writing device or the acoustic transmission means, respectively, and the external computer (7) is configured bidirectionally so that the external computer (7) is able to communicate with the user via the transmission means in an acoustic manner and with the multi-function chip of the chip card through data transmission via the card reading/writing device and, vice versa, the user and the chip card are able to communicate with the external computer (7), and wherein, within the scope of communication between the card reading/writing device or the acoustic transmission means, respectively, and the external computer (7), the chip card is activated by a user prior to the first use, by:
a) personal data about the user being stored in the external computer (7) prior to said communication,
b) the external computer (7) prompting the user via the card reading/writing device and/or the acoustic transmission means to speak a password into the acoustic transmission means, and
c) the external computer (7) deriving a digital voiceprint from the spoken password, storing said digital voiceprint internally, transmitting said digital voiceprint to the card reading/writing device to store the digital voiceprint in a voiceprint memory of the multi-function chip on the chip card, and subsequently confirming that the chip card has been activated,
**characterised in that** each use of the chip card is preceded by a comparison of the voiceprint stored in the multi-function chip of the chip card with the voiceprint stored in the memory of the external computer (7),
that, if these voiceprints correspond to each other, the external computer (7) additionally makes a comparison between the voiceprint and the voice of the user of the chip card, and
that the use of the chip card is only approved by the external computer (7) when these voiceprints correspond to each other and a predefined degree of correspondence is determined during the voice comparison.

2. The method according to claim 1, **characterised in that**, in step c), the voiceprint stored in the voiceprint memory of the multi-function chip of the chip card is retransmitted to the external computer (7) before the activation of the chip card is confirmed by the external computer (7), for comparison with the voiceprint stored in the external computer (7), wherein the external computer (7) confirms the activation when the retransmitted voiceprint corresponds to the internally stored voiceprint.

3. The method according to claim 1, **characterised in that**, in step a), it is also defined which use functions stored in the multi-function chip are to be activated.

4. The method according to claim 1, **characterised in that** the external computer (7) prompts the user via the card reading/writing device and/or the acoustic transmission means to speak predefined keywords into the acoustic transmitter for the voice comparison, said keywords characterising the requested use.

5. The method according to claim 1 or 4, **characterised in that** the predefined degree of correspondence is classified by the importance of the use requested by the user, wherein, if said importance is high, this degree of correspondence is assigned an accordingly higher priority than if said importance is low.

6. The method according to any one of claims 1 to 5, **characterised in that** the check for correspondence of the voice with the voiceprint is made only for a defined number of times, wherein, if the result is negative, either the connection to the external computer (7) is interrupted and/or a connection of the acoustic transmitter to an operator is established.

7. The method according to claim 6, **characterised in that**, if the correspondence result is negative, the chip card is disabled by the external computer (7), if applicable after communication with the operator.

8. The method according to any one of claims 1 to 7, **characterised in that** the voiceprint is refined during each communication and that the refined voiceprint is stored in the multi-function chip of the chip card and in the external computer (7), replacing the previous voiceprint.

## Revendications

1. Procédé d'exploitation d'une installation pour utiliser une carte à puce à puce multi-fonctions, dans lequel pour identifier un utilisateur autorisé par un ordinateur externe (7), sa caractéristique vocale est enregistrée sous forme d'un voice-print, dans lequel l'installation présente un appareil d'écriture/de lecture de carte et un moyen de transmission acoustique qui sont reliés à l'ordinateur externe (7), dans lequel la transmission entre l'appareil d'écriture/de lecture de carte, respectivement le moyen de transmission acoustique et l'ordinateur externe (7) est conçue bidirectionnelle de sorte que l'ordinateur externe (7) peut communiquer de façon acoustique par le biais du moyen de transmission avec l'utilisateur et par transmission de données par le biais de l'appareil d'écriture/de lecture de carte avec la puce multi-fonctions de la carte à puce, et inversement, l'utilisateur et la carte à puce peuvent communiquer avec l'ordinateur externe (7), et dans lequel la carte à puce est activée par un utilisateur dans le cadre d'une communication entre l'appareil d'écriture/de lecture de carte, respectivement le moyen de transmission acoustique et l'ordinateur externe (7) avant la première procédure d'utilisation en ce que :
a) des données personnelles sur l'utilisateur sont enregistrées dans l'ordinateur externe (7) avant cette communication,
b) l'ordinateur externe (7) demande à l'utilisateur, par l'appareil d'écriture/de lecture de carte et/ou le moyen de transmission acoustique, de prononcer un mot de passe dans le moyen de transmission acoustique, et
c) l'ordinateur externe (7) déduit, enregistre en interne, transmet à l'appareil d'écriture/de lecture de carte, un voice-print numérique à partir du mot de passe prononcé, pour enregistrer le voice-print numérique dans une mémoire de voice-print de la puce multi-fonctions sur la carte à puce, et confirme là-dessus l'activation de la carte à puce,
**caractérisé en ce qu'**avant chaque utilisation de la carte à puce est effectuée une comparaison du voice-print enregistré dans la puce multi-fonction de la carte à puce avec le voice-print enregistré dans la mémoire de l'ordinateur externe (7),
qu'en cas de concordance de ces voice-prints, l'ordinateur externe (7) effectue en outre une comparaison entre le voice-print et la voix de l'utilisateur de la carte à puce, et
que l'utilisation de la carte à puce par l'ordinateur externe (7) n'est activée que lorsque ces voice-prints concordent et lors de la comparaison de voix, un degré de concordance prédéterminé est calculé.

2. Procédé selon la revendication 1, **caractérisé en ce qu'**à l'étape c), le voice-print enregistré dans la mémoire de voice-prints de la puce multi-fonctions de la carte à puce avant la confirmation de l'activation de la carte à puce par l'ordinateur externe (7) est retransmis à celui-ci pour comparaison avec le voice-print enregistré dans l'ordinateur externe (7), qui confirme l'activation lorsque le voice-print retransmis concorde avec le voice-print enregistré en interne.

3. Procédé selon la revendication 1, **caractérisé en ce qu'**à l'étape a), il est également déterminé quelles fonctions d'utilisation placées dans la puce multi-fonctions doivent être activées.

4. Procédé selon la revendication 1, **caractérisé en ce que** l'ordinateur externe (7) demande à l'utilisateur, par l'appareil d'écriture/de lecture de carte et/ou le moyen de transmission acoustique, de prononcer des mots de passe prédéterminés pour la comparaison vocale dans le transmetteur acoustique, qui caractérisent l'utilisation demandée.

5. Procédé selon la revendication 1 ou 4, **caractérisé en ce que** le degré de concordance prédéterminé est classé selon l'importance de l'utilisation demandée par l'utilisateur, dans lequel ce degré de concordance en cas d'importance élevé est mis plus haut que pour une importance moindre.

6. Procédé selon l'une des revendications 1 à 5, **caractérisé en ce que** l'examen de la concordance de la voix avec le voice-print n'est exécuté qu'un nombre défini de fois, sachant qu'en cas de résultat négatif, la liaison vers l'ordinateur externe (7) est interrompue et/ou une liaison du transmetteur acoustique vers un opérateur est établie.

7. Procédé selon la revendication 6, **caractérisé en ce que** la carte à puce, en cas de résultat de concordance négatif, est bloquée par l'ordinateur externe (7) le cas échéant après communication avec l'opérateur.

8. Procédé selon l'une des revendications 1 à 7, **caractérisé en ce que** le voice-print est affiné à chaque communication, et que le voice-print affiné est enregistré dans la puce multi-fonctions de la carte à puce et dans l'ordinateur externe (7) en remplaçant le voice-print précédent.
